# EUROPEAN PATENT APPLICATION

(11) **EP 3 117 876 A1**
(43) Date of publication of application: **18.01.2017**
(21) Application number: 16179796.4
(22) Date of filing: 15.07.2016
(51) Int. Cl.: A62C 3/08, A62C 35/13, A62C 37/36, A62C 99/00

(54) **AIRCRAFT WITH FIRE SUPPRESSION CONTROL SYSTEM**

(30) Priority: 17.07.2015 GB 201512503
(71) Applicant: Kidde Graviner Limited, Slough, Berkshire SL3 0HB (GB)
(72) Inventor: GATSONIDES, Josephine G., Dunstable, Bedfordshire LU5 5DA (GB); RENNIE, Paul A., Bracknell, Berkshire RG12 0TS (GB); SMITH, Stuart M., Colnbrook, Berkshire SL3 0LJ (GB)
(74) Representative: Hall, Matthew Benjamin

(57) **Abstract**

An aircraft has a fire suppression control system for a plurality of enclosures (17) within the aircraft. The aircraft comprises a directional valve (6) for each enclosure, sensors (20) provided for each enclosure, for monitoring variables of the enclosure, one or more fire suppression agent bottles (1a, 1b) and a control unit (12) for regulating the discharge of the fire suppression agent. The sensors are operatively linked by the control unit to a warning system in a cockpit (30) of the aircraft. The warning system comprises a separate fire hazard alarm (32) and manual control (35) for each enclosure. In the case of detection of a hazardous variable in an enclosure, the warning system fire hazard alarm for that enclosure is activated and the directional valve for the endangered enclosure is unlocked by the control unit. Only then can the manual control be manually activated to open the directional valve of the endangered enclosure and discharge the fire suppression agent through the unlocked, open directional valve to the endangered enclosure.

## Description

### TECHNICAL FIELD

The present disclosure relates to fire suppression on board aircraft.

### BACKGROUND

Fires on board aircraft can be extremely damaging, whether to the goods in a cargo hold, the passengers on the aircraft or to the structure of the aircraft itself. It is known in the art to provide aircraft with fire suppression systems, in order to quickly extinguish fires before they can cause serious harm. However, there are a number of problems which make suppressing a fire on board an aircraft quite difficult.

In conventional land-based fire suppression systems, the fire suppression agent may act to starve the fire of oxygen. If a fire has less than 10-12% of oxygen in the surrounding air, it will not restart. However, in aircraft, the various enclosures are not completely airtight and ventilation is provided by a central ventilation system, which circulates air throughout the various enclosures of the aircraft. Some of the fire suppression agent discharged would leak out of the enclosure containing the fire, thereby increasing the proportion of oxygen in the air and possibly allowing a fire to restart.

Additionally, during the descent of an aircraft, the external ambient air and cabin pressures increase, and with that, the proportion of oxygen in the aircraft increases. Thus even if the proportion of oxygen in a protected enclosure is initially reduced below a certain level, over time, the proportion will slowly increase again, thereby undoing the work of the fire suppression agent and potentially causing the fire not to be put out, or to restart. This situation presents a difficulty in controlling the environment around the fire.

The current aircraft fire suppression systems known in the art initially introduce an initial large quantity of fire suppression agent into the enclosure. In order to then avoid the above mentioned problems, these systems then continue to discharge a slow flow of the fire suppression agent, in order to make up for the losses in the aircraft and the addition of further oxygen.

Regarding the choice of fire suppression agent, many current systems make use of halon which may, for example, comprise halon 1211, which is bromochlorodifluoromethane (CF₂ClBr), or halon 1301 which is bromotrifluoromethane (CBrF₃), or a mixture of the two. However, in recent years, production of halon has become illegal due to environmental concerns of ozone depletion and thus there is a limited supply available for use as a fire suppression agent. Various other fire suppression agents have been tested, including inert gas fire suppression agents. These may include nitrogen, argon, helium, FM 200 or carbon dioxide. There is also the possibility of using recovered nitrogen and carbon dioxide. It has been found that a smaller quantity of halon is required to put out the same size fire than inert gas. Since a substantially greater volume of inert gas needs to carried than that of halon, a greater weight is carried for the same suppressing capability and results in more aircraft fuel being burnt to carry the fire suppression agent. Consequently, for current systems, the environmental impact of the additional greenhouse gases is comparable to the use of halon and so halon is still used in aircraft fire suppression systems, with some systems using a combination of halon and halon-replacement systems.

It would be desirable to improve the efficiency of inert gas based fire suppression systems. In current systems, inefficiency can occur due to activation by the pilot of the fire suppression system in the wrong area or zone.

Some improvements in this regard are taught in EP-A-2813266 and EP-A-2353658, the entire contents of which are incorporated herein by reference.

Moreover, it has been found that the likelihood of an alarm being triggered is significantly higher on the ground than in the air. Fortunately, the majority of these are false alarms rather than real fires. Often these alarms can be triggered during maintenance of the aircraft by workmen working in an enclosure and creating dust or otherwise affecting the environmental conditions. At such times, workmen may be in the enclosure or in the vicinity when the alarm is triggered. While there is a general move to make systems more automated to improve their operation in the air, this can sometimes lack consideration for health and safety principles that might apply, say, when the aircraft is on the ground.

### SUMMARY OF THE DISCLOSURE

According to a first aspect of the disclosure, there is provided an aircraft having a fire suppression control system for a plurality of enclosures within the aircraft, comprising: a directional valve for each enclosure; sensors provided for each enclosure, for monitoring variables of the enclosure; one or more fire suppression agent bottles; and a control unit for regulating the discharge of the fire suppression agent; wherein the sensors are operatively linked by the control unit to a warning system in a cockpit of the aircraft, the warning system comprising a separate alarm and manual control for each enclosure; wherein, in the case of detection of a hazardous variable in an enclosure, the warning system alarm for that enclosure is activated and the directional valve for the endangered enclosure is unlocked by the control unit, such that only then can the manual control be manually activated to open the directional valve of the endangered enclosure and discharge the fire suppression agent through the unlocked, open directional valve to the endangered enclosure.

By ensuring control of unlocking and opening the directional valves, both by the control unit and a manually activated control, there is less wastage of fire suppression agent due to accidental discharge into the wrong enclosure, or, for example, due to dust produced while the aircraft is on the ground undergoing maintenance, and not due to an actual fire.

In some embodiments, after an initial high rate discharge of fire suppression agent, the control unit regulates a low rate discharge of fire suppression agent based on the variables monitored by the sensors.

By regulating the subsequent low rate discharge of fire suppression agent, there is even less wastage of fire suppression agent, so even more weight and fuel saving in the aircraft.

In some embodiments the variables in the enclosure monitored by the sensors include: temperature; pressure; light; UV levels; smoke levels; phenomena of fire; or ambient air composition, such as quantities or concentrations of combustion products, and/or quantities or concentrations of hazardous volatile gases.

In some embodiments, within each enclosure, a plurality of different variables is monitored.

By monitoring a plurality of variables, more accurate fire detection can be achieved, based on more than one type of sensory data.

In some embodiments, the fire suppression control system further comprises: pre-stored maximum and minimum thresholds for a variable to be considered a hazard; and pre-stored maximum and minimum thresholds for a variable to be considered a developing hazard, which lie inside of the maximum and minimum thresholds for a hazard; and the warning system further comprises a developing fire hazard alarm in the cockpit for each enclosure; wherein the event of hazardous variable detection occurs when a variable measured by a sensor crosses one of the pre-stored maximum or minimum hazard thresholds; wherein an event of a developing hazardous variable detection occurs when a variable measured by a sensor crosses one of the pre-stored maximum or minimum developing hazard thresholds; and the control unit: activates the developing fire hazard alarm in the cockpit for the enclosure with the developing hazard detected; and unlocks the directional valve for the enclosure with the developing hazard, whereupon the manual control in the cockpit specific to that enclosure can be manually activated to open the directional valve to discharge fire suppression agent to that enclosure.

By detecting a developing hazard before it becomes a hazard, preventative action can take place to avoid or reduce damage to the contents of the enclosure with the developing hazard detected. For example, a volatile gas concentration which could cause a fire might be detected and can be acted upon before a fire starts.

In some embodiments, in the case of multiple hazardous variable detections in separate enclosures: the warning system is activated separately for each endangered enclosure; the directional valve for each of the endangered enclosures is unlocked; and the manual control for each enclosure must be manually activated separately, so that the fire suppression agent can be discharged through the unlocked directional valves where the manual controls for the endangered enclosures have been manually activated.

By activating the warning system separately for each enclosure where a fire is detected, the manual activation of the manual control for each endangered enclosure can be selected by the pilot or other person in the cockpit, and so regulated humanly, e.g. to avoid discharge of fire suppression agent to an enclosure which the person in the cockpit knows is causing the warning system to give off a false alarm.

According to a second aspect of the disclosure, there is provided a method of controlling a fire suppression system in an aircraft for a plurality of enclosures within the aircraft, comprising: providing a control unit for regulating the discharge of fire suppression agent, the control unit monitoring variables measured using sensors in each enclosure; and in the case of hazardous variable detection, such that an enclosure is considered to be endangered: the control unit activating a fire hazard warning system alarm in a cockpit of the aircraft specific to the endangered enclosure; the control unit unlocking a directional valve specific to the endangered enclosure; manually activating a manual control in the cockpit of the aircraft, specific to the endangered enclosure, to open the directional valve of the endangered enclosure when the warning system is activated; and discharging fire suppression agent from one or more fire suppression agent bottles, through the unlocked, open directional valve and into the endangered enclosure.

In some embodiments, the method further comprises the control unit regulating a low rate discharge of fire suppression agent after an initial high rate discharge, based on the variables monitored by the sensors.

In some embodiments, the variables in the enclosure monitored by the sensors include: temperature; pressure; light; UV levels; smoke levels; phenomena of fire; or ambient air composition, such as quantities or concentrations of combustion products, and/or quantities or concentrations of hazardous volatile gases.

In some embodiments, within each enclosure, a plurality of different variables is monitored.

In some embodiments, the method further comprises: the control unit comparing the monitored variables against pre-stored maximum and minimum thresholds for a variable to be considered a hazard and against pre-stored maximum and minimum thresholds for a variable to be considered a developing hazard, which lie inside of the maximum and minimum thresholds for a hazard; wherein the event of hazardous variable detection occurs when a variable measured by a sensor crosses one of the pre-stored maximum or minimum hazard thresholds; and wherein in an event of a developing hazardous variable detection, which occurs when a variable measured by a sensor crosses one of the pre-stored maximum or minimum developing hazard thresholds: the control unit activating a developing fire hazard alarm in the cockpit specific to the enclosure with the developing hazard detected; and the control unit unlocking the directional valve for the enclosure with the developing hazard; and manually activating the manual control in the cockpit specific to that enclosure, to open the directional valve to that enclosure and thereby discharge fire suppression agent to that enclosure.

In some embodiments, in the case of multiple hazardous variable detections in separate enclosures: the warning system is activated separately for each endangered enclosure; the directional valve for each of the endangered enclosures is unlocked; and the manual control for each enclosure must be manually activated separately, so that the suppression agent can be discharged through the unlocked directional valves where the manual controls for the endangered enclosures have been manually activated.

### BRIEF DESCRIPTION OF THE DRAWINGS

Various embodiments of the disclosure will now be described with reference to the following description and drawings by way of example only, and with reference to certain figures, wherein:

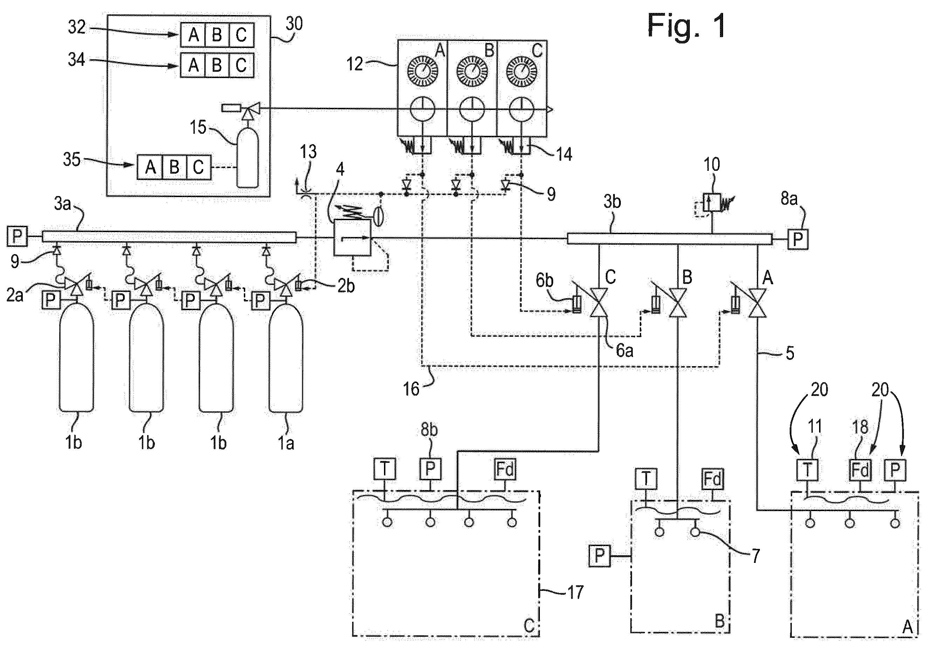

Figure 1 shows a schematic diagram of an aircraft having a fire suppression control system for a plurality of enclosures; and
Figure 2 shows a graph of an exemplary mass flow rate of fire suppression agent over time in order to suppress a fire, from the moment of initial activation, during cruising at altitude and descent till arrival at ground level of the aircraft.

### DETAILED DESCRIPTION

An aircraft with a fire suppression system comprises multiple enclosures 17, A, B, C. These enclosures 17 may include, but are not limited to, cargo bays, passenger enclosures, fuel tanks the auxiliary power unit and the electronics bay. The enclosures 17 may also be referred to as zones, compartments or areas.

Each enclosure 17 comprises a plurality of sensors 20. The sensors 20 may be for measuring temperature 11 or pressure 8b or may comprise a fire detection system 18. The fire detection system 18 may comprise sensors, including sensors for measuring temperature, pressure, the amount of smoke present in the enclosure 17, the oxygen concentration in the air in the enclosure 17, the concentration of combustion products in the air in the enclosure 17, UV sensors, light sensors and the like. Each of the temperature sensors 11, pressure sensors 8b and/or fire detection systems 18 transmits data to a control unit 12.

The control unit 12 comprises a processor and a memory, for monitoring and storing the data from the sensors 20. The memory further comprises pre-set data for comparison against the data received from the sensors 20, in order to recognise if a fire has broken out, or is likely to break out in any of the enclosures 17.

The fire suppression system further includes one or more high pressure bottles 1a, 1b containing fire suppression agent, e.g. arranged as a bank of fire suppression agent bottles 1 a, 1 b. Each of the bottles 1 a, 1 b comprises a bottle valve 2a and a valve actuator 2b, and is connected by a check valve 9 to a high pressure collector manifold 3a. The manifold 3a in turn is connected to a discharge pressure regulator 4, which may be in the form of a control valve. The discharge regulator 4 is further connected to a low pressure distributor manifold 3b for discharging fire suppression agent to the enclosure(s).

The valve actuators 2b and the discharge pressure regulator 4 are operatively connected to the control unit 12 and configured to receive signals from the control unit 12.

Stemming from the low pressure distributor manifold 3b is a discharge network 5, comprising multiple branches. At least one respective branch connects the low pressure distributor manifold 3b to each enclosure 17. On each branch of the discharge network 5, between the low pressure distributor manifold 3b and the respective enclosures 17, there is located a respective directional valve 6a, configured to divert a flow of fire suppression agent from the low pressure distributor manifold 3b to the respective enclosure 17.

Each enclosure 17 may further comprise a number of discharge nozzles 7 for discharging fire suppression agent. The discharge nozzles for each enclosure 17 are connected to the respective branch of discharge network 5. The size and arrangement of the nozzle orifices determines the velocity and distribution of the fire suppression agent into the enclosure 17.

The low pressure distributor manifold 3b may also be connected to an over pressure relief valve 10. The over pressure relief valve 10 acts to ensure egress of excess fire suppression agent should the pressure in the manifold 3b exceed a certain threshold pressure. The pressure in the manifold 3b may be determined from a system pressure transducer 8a, which monitors the status of the pressure of the fire suppression agent.

The system operates in the following manner. The sensors 20 measure data in each enclosure 17. All of this data is transmitted to the control unit 12. In the control unit 12, the processor compares the data against pre-stored maximum and minimum thresholds, stored in the memory. If the data exceeds the respective thresholds, it is likely that a fire has broken out. It is considered that a hazard has been detected and the enclosure containing the hazard is considered an endangered enclosure. The control unit 12 thus sends a warning signal to the cockpit 30, in the form of a fire hazard alarm 32 specific to a particular enclosure 17 and proceeds to unlock the directional valve 6a specific to the enclosure 17 which is sending data signals which have crossed the threshold. In the cockpit 30, the pilot, co-pilot or other member of staff will activate a manual control 35 for the respective enclosure 17. In doing so, the unlocked directional valve 6a will then be opened.

The memory also contains pre-stored maximum and minimum thresholds, which, if data exceeds these thresholds, indicates a developing hazard for the enclosure 17 whence that data was measured by the sensors 20. In the case of a developing hazard being indicated, the enclosure is considered to be endangered. The control unit 12 may send a different warning signal to the cockpit 30, in the form of a developing fire hazard alarm 34 specific to a particular enclosure 17 and may proceed to unlock the directional valve 6a specific to the enclosure 17 which is sending data signals which have crossed the threshold. In the cockpit 30, the pilot, co-pilot or other member of staff will activate a manual control 35 for the respective enclosure 17. In doing so, the unlocked directional valve 6a will then be opened.

One example might be where the system warns of a dangerous situation developing, for example, where flammable air/gas mixtures have been detected in the ambient air composition, allowing preventative inerting to take place before a fire occurs.

When the pilot activates the opening of the directional valve 6a, the control unit 12 controls the opening of initially a master bottle 1 a, followed by slave bottles 1 b, by the valve 2a and actuator 2b, the rate of flow of fire suppression agent from the bottles 1a and 1b into the high pressure collector manifold 3a and via the discharge pressure regulator 4, such that there is sufficient fire suppression agent to flow through the discharge network 5 to the enclosure 17 in the form of a high rate discharge.

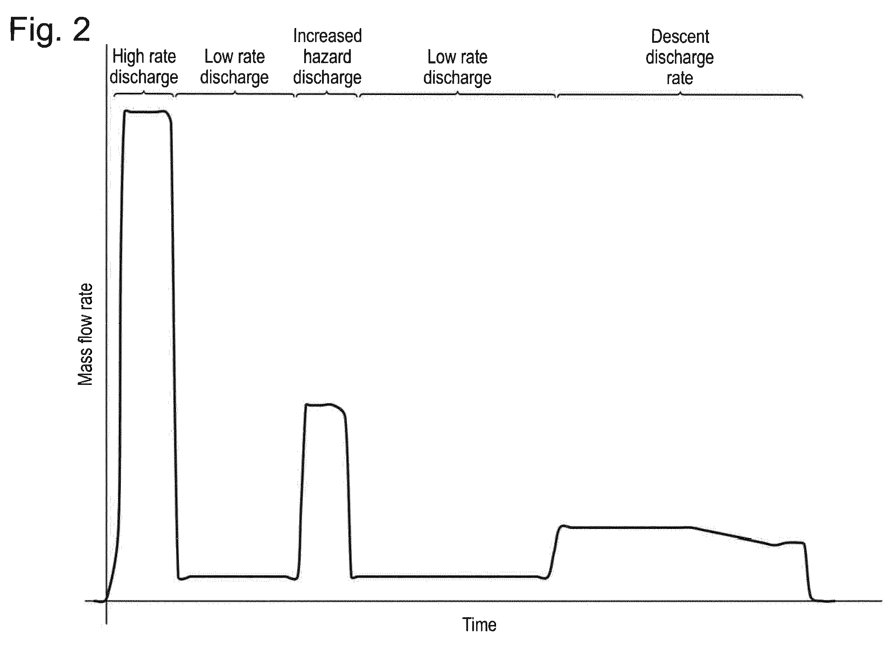

As can be seen in Figure 2, the mass flow rate of the initial high rate discharge can be more than 10 times that of the minimum low rate discharge. The increased hazard discharge rate may be three, four, five or more times greater than the minimum low rate discharge and the descent discharge rate may be two, three, four or more times greater than the minimum low rate discharge.

Throughout the initial high rate discharge and thereafter, the sensors 20 continue to transmit data to the control unit 12, which continues to monitor and compare the data with pre-set values stored in the memory. In accordance with the data collected by the sensors 20 in the enclosure 17, the control unit 12 varies the quantity of fire suppression agent which is discharged by the discharge pressure regulator 4 to the enclosure 17, thereby ensuring efficiency of supply.

By being efficient with fire suppression agent, the large quantities of inert gas which might need to be carried can be reduced. This results in weight savings for the aircraft and thus, weight, space and fuel savings are made compared to earlier systems.

Moreover, fire suppression agent management on an aircraft is extremely important, since if the aircraft runs out of agent part-way through the flight, then the fire may restart, particularly during descent of the aircraft, with no means of prevention remaining. Thus by rationing the fire suppression agent in this economic way, a greater safety of the aircraft is ensured.

A further benefit can also be found in the need for human assistance in the process. If there were not a stage of manually activating the unlocked directional valves 6a, then an error may be made in the unnecessary automatic discharge of agent to the system, which could waste limited fire suppression agent resources and/or endanger any person present in the enclosure 17 with a false alarm, by depleting the area of oxygen.

Yet another benefit is the two-fold unlocking of the directional valves 6a. The discharge of fire suppression agent to a particular enclosure 17 requires both of a human input and a system input which is based on monitored variables. Thus the essential nature of both the machine and human intervention ensures that the pilot or other person in the cockpit cannot accidentally discharge fire suppression agent into the wrong enclosure 17 (i.e., an enclosure 17 with no detected fire symptoms), and that the system is not able to discharge fire suppression agent into an enclosure 17 without human authorisation. The directional valves for the other enclosures remain locked and closed. This therefore serves to improve the safety and efficiency of the system.

In some embodiments, the control unit 12 may be electric; in others, it may be electronic, hydraulic, pneumatic or mechanical.

In the case of a pneumatic system, the fire suppression system may also comprise a pilot pressure bottle 15 with an associated valve, a pilot regulator 14, a pilot pressure network 16 and check valves 9. The pilot pressure bottle 15 comprises a high pressure source which provides stored energy. The associated valve is the manual control 35 which is activated by the pilot or other member of staff in the cockpit 30 when an alarm 32, 34 is received in the cockpit 30.

When the pilot activates the manual control 35, the pressure is released from the pilot pressure bottle 15 to a pilot pressure network 16. The pressurised fluid flows via a pilot regulator 14 for each respective enclosure 17 and acts to unlock the directional valve 6a associated with a fire event. Fluid from the pilot pressure bottle 15 also flows via check valves 9 to the bottles 1a, 1b, prompting a bottle to be opened and additionally, flows via discharge pressure regulator 4 for control of the discharge of the fire suppression agent to the low pressure distributor manifold 3b and thus to the enclosure 17 in which a fire has occurred.

The pneumatic system may further comprise a vent exhaust 13 for venting the pneumatic fluid from the system in the case of over-pressurisation.

It is envisioned that the fire suppression agent in the above system could comprise inert gas for both of the initial high rate discharge to supress a fire and the subsequent low rate discharge. The fire suppression agent in one example comprises a mixture of argon and nitrogen, but could comprise other gases or combinations of gases.

In some embodiments, the system may comprise a manual override for use in emergencies. The manual override may comprise two manual controls for each enclosure to be activated. The manual controls may require two different forms of movement or may require two hands to effect the override, in order to prevent accidental activations.

In this case, activation of a first manual control would carry out the same operation as the control unit 12, i.e. unlock the directional valve 6a to the relevant enclosure 17. Subsequent activation of the second manual control for the relevant enclosure 17 would proceed to open the directional valve 6a for the relevant enclosure. In this manner, in the event that the control unit 12 fails, there is still the possibility to override the unit and allow fire to be suppressed and extinguished.

In the above case, the manual override system may use any combination of hydraulic, pneumatic or cabled connections to the valves.

The present disclosure can be further modified, as will be understood by one skilled in the art, within the scope of the present invention as defined in the claims.

## Claims

1. An aircraft having a fire suppression control system for a plurality of enclosures within the aircraft, comprising:
a directional valve for each enclosure;
sensors provided for each enclosure, for monitoring variables of the enclosure;
one or more fire suppression agent bottles; and
a control unit for regulating the discharge of the fire suppression agent;
wherein the sensors are operatively linked by the control unit to a warning system in a cockpit of the aircraft, the warning system comprising a separate fire hazard alarm and manual control for each enclosure;
wherein, in the case of detection of a hazardous variable in an enclosure, the warning system fire hazard alarm for that enclosure is activated and the directional valve for the endangered enclosure is unlocked by the control unit, such that only then can the manual control be manually activated to open the directional valve of the endangered enclosure and discharge the fire suppression agent through the unlocked, open directional valve to the endangered enclosure.

2. The aircraft of claim 1, wherein after an initial high rate discharge of fire suppression agent, the control unit regulates a low rate discharge of fire suppression agent based on the variables monitored by the sensors.

3. The aircraft of claims 1 or 2, wherein the variables in the enclosure monitored by the sensors include:
temperature;
pressure;
light;
UV levels;
smoke levels;
phenomena of fire; or
ambient air composition, such as quantities or concentrations of combustion products, and/or quantities or concentrations of hazardous volatile gases.

4. The aircraft of any preceding claim, wherein within each enclosure, a plurality of different variables is monitored.

5. The aircraft of any preceding claim, further comprising:
pre-stored maximum and minimum thresholds for a variable to be considered a hazard;
wherein the event of hazardous variable detection occurs when a variable measured by a sensor crosses one of the pre-stored maximum or minimum hazard thresholds.

6. The aircraft of claim 5, further comprising:
pre-stored maximum and minimum thresholds for a variable to be considered a developing hazard, which lie inside of the maximum and minimum thresholds for a hazard; and
the warning system further comprising a developing fire hazard alarm in the cockpit for each enclosure;
wherein an event of a developing hazardous variable detection occurs when a variable measured by a sensor crosses one of the pre-stored maximum or minimum developing hazard thresholds; and the control unit:
activates the developing fire hazard alarm in the cockpit for the enclosure with the developing hazard detected; and
unlocks the directional valve for the enclosure with the developing hazard, whereupon the manual control in the cockpit specific to that enclosure can be manually activated to open the directional valve to discharge fire suppression agent to that enclosure.

7. The aircraft of any preceding claim, wherein in the case of multiple hazardous variable detections in separate enclosures:
the warning system is activated separately for each endangered enclosure;
the directional valve for each of the endangered enclosures is unlocked; and
the manual control for each enclosure must be manually activated separately, so that the fire suppression agent can be discharged through the unlocked directional valves where the manual controls for the endangered enclosures have been manually activated.

8. A method of controlling a fire suppression system in an aircraft for a plurality of enclosures within the aircraft, comprising:
providing a control unit for regulating the discharge of fire suppression agent, the control unit monitoring variables measured using sensors in each enclosure; and
in the case of hazardous variable detection, such that an enclosure is considered to be endangered:
the control unit activating a first warning system fire hazard alarm in a cockpit of the aircraft specific to the endangered enclosure;
the control unit unlocking a directional valve specific to the endangered enclosure;
manually activating a manual control in the cockpit of the aircraft, specific to the endangered enclosure, to open the directional valve of the endangered enclosure when the warning system is activated; and
discharging fire suppression agent from one or more fire suppression agent bottles, through the unlocked, open directional valve and into the endangered enclosure.

9. The method of claim 8, further comprising, the control unit regulating a low rate discharge of fire suppression agent after an initial high rate discharge, based on the variables monitored by the sensors.

10. The method of claims 8 or 9, wherein the variables in the enclosure monitored by the sensors include:
temperature;
pressure;
light;
UV levels;
smoke levels;
phenomena of fire; or
ambient air composition, such as quantities or concentrations of combustion products, and/or quantities or concentrations of hazardous volatile gases.

11. The method of claims 8, 9 or 10 wherein within each enclosure, a plurality of different variables is monitored.

12. The method of any of claims 8 to 11, further comprising:
the control unit comparing the monitored variables against pre-stored maximum and minimum thresholds for a variable to be considered a hazard;
wherein the event of hazardous variable detection occurs when a variable measured by a sensor crosses one of the pre-stored maximum or minimum hazard thresholds.

13. The method of any of claim 12, further comprising:
the control unit comparing the monitored variables against pre-stored maximum and minimum thresholds for a variable to be considered a developing hazard, which lie inside of the maximum and minimum thresholds for a hazard;
wherein in an event of a developing hazardous variable detection, which occurs when a variable measured by a sensor crosses one of the pre-stored maximum or minimum developing hazard thresholds:
the control unit activating a developing fire hazard alarm in the cockpit specific to the enclosure with the developing hazard detected; and
the control unit unlocking the directional valve for the enclosure with the developing hazard; and
manually activating the manual control in the cockpit specific to that enclosure, to open the directional valve to that enclosure and thereby discharge fire suppression agent to that enclosure.

14. The method of any of claims 8 to 13, wherein in the case of multiple hazardous variable detections in separate enclosures:
the warning system is activated separately for each endangered enclosure;
the directional valve for each of the endangered enclosures is unlocked; and
the manual control for each enclosure must be manually activated separately, so that the suppression agent can be discharged through the unlocked directional valves where the manual controls for the endangered enclosures have been manually activated.
